# EUROPÄISCHE PATENTSCHRIFT

(11) **EP 2 935 006 B1**
(45) Veröffentlichungstag und Bekanntmachung des Hinweises auf die Patenterteilung: **06.03.2019**
(21) Anmeldenummer: 13814129.6
(22) Anmeldetag: 20.12.2013
(51) Int. Cl.: B64D 11/06

(54) **FLUGZEUGSITZBEFESTIGUNGSVORRICHTUNG**
SECURING DEVICE ON AN AIRCRAFT SEAT
DISPOSITIF DE FIXATION SUR UN SIÈGE D'AVION

(30) Priorität: 21.12.2012 DE 102012112942
(43) Veröffentlichungstag der Anmeldung: 28.10.2015
(73) Patentinhaber: Recaro Aircraft Seating GmbH & Co. KG, 74523 Schwäbisch Hall (DE)
(72) Erfinder: SCHÜRG, Christoph, 74523 Schwäbisch Hall (DE); SCHREYER, Tim, 74523 Schwäbisch Hall (DE); LOISCH, Felix, 70197 Stuttgart (DE); WÄLDELE, Martin, 74523 Schwäbisch Hall (DE); HUNTSCHA, Mathias, Schwäbisch Hall 74523 (DE)
(74) Vertreter: Daub, Thomas
(86) Internationale Anmeldenummer: PCT/EP2013/077554
(87) Internationale Veröffentlichungsnummer: WO 2014/096295

(56) Entgegenhaltungen:
- WO-A2-2007/109703
- DE-A1-102010 052 807
- FR-A1- 2 954 246
- US-A1- 2006 219 857
- US-A1- 2008 164 729
- US-A1- 2011 067 606
- US-A1- 2012 120 626
- US-A1- 2012 248 833
- US-B1- 7 665 804

## Beschreibung

### Stand der Technik

Die Erfindung betrifft eine Flugzeugsitzbefestigungsvorrichtung nach dem Anspruch 1. Die Aufgabe der Erfindung besteht insbesondere darin, eine gattungsgemäße Vorrichtung mit verbesserten Eigenschaften hinsichtlich einer Befestigung für einen Tablet-Computer bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können. Das Dokument US 2008/164729 zeigt eine Sitzbefestigungsvorrichtung.

### Vorteile der Erfindung

Es wird eine Flugzeugsitzbefestigungsvorrichtung mit zumindest einem Sitzbauteil und mit zumindest einer Befestigungseinheit, die zumindest teilweise an dem Sitzbauteil angeordnet und dazu vorgesehen ist, in zumindest einem Betriebszustand zumindest einen Tablet-Computer an dem Sitzbauteil austauschbar und bedienbar zu befestigen, vorgeschlagen. Alternativ oder zusätzlich zu einer Befestigung eines Tablet-Computers an dem Sitzbauteil könnte die Befestigungseinheit dazu vorgesehen sein, ein Smartphone und/oder einen Monitor an dem Sitzbauteil austauschbar und bedienbar zu befestigen. Beispielsweise ist das Sitzbauteil als eine Kopfstütze, als eine Rückenlehne, als ein Sitzboden, als eine Armlehne und/oder als eine Aufständereinheit ausgebildet. Alternativ sind weitere, einem Fachmann als sinnvoll erscheinende Ausbildungen des Sitzbauteils denkbar. Insbesondere ist die Befestigungseinheit dazu vorgesehen, in zumindest einem Betriebszustand den Tablet-Computer kraftschlüssig und/oder formschlüssig an dem Sitzbauteil zu befestigen. Beispielsweise ist die Befestigungseinheit dazu vorgesehen, in zumindest einem Betriebszustand den Tablet-Computer mittels einer Rastverbindung, einer Klemmverbindung und/oder einer Verbindung mittels eines Klettverschlusses zu befestigen. Alternativ sind weitere, einem Fachmann als sinnvoll erscheinende Befestigungsarten denkbar. Insbesondere ist die Befestigungseinheit dazu vorgesehen, in zumindest einem Betriebszustand den Tablet-Computer unter Vermeidung einer Bewegung des Tablet-Computers bei Einwirken von durch eine Bedienung des Tablet-Computers erzeugter Kräfte zu befestigen. Beispielsweise kann die Bedienung des Tablet-Computers über Eingaben mittels einer Tastatur, eines Eingabefelds und/oder weiterer Eingabemittel erfolgen. Insbesondere ist die Befestigungseinheit dazu vorgesehen, zumindest eine Gewichtskraft des Tablet-Computers zu halten und an das Sitzbauteil zu übertragen. Insbesondere ist die Befestigungseinheit dazu vorgesehen, in zumindest einem Betriebszustand den Tablet-Computer an dem Sitzbauteil werkzeuglos lösbar zu befestigen. Alternativ könnte die Befestigungseinheit dazu vorgesehen sein, in zumindest einem Betriebszustand den Tablet-Computer an dem Sitzbauteil mittels zumindest eines Werkzeugs lösbar zu befestigen. Unter der Wendung, dass die Befestigungseinheit "zumindest teilweise" an dem Sitzbauteil angeordnet ist, soll insbesondere verstanden werden, dass das Sitzbauteil und die Befestigungseinheit in einem direkten und/oder indirekten Kontakt angeordnet sind. Insbesondere ist das Sitzbauteil dazu vorgesehen, zumindest eine Gewichtskraft zumindest der Befestigungseinheit und/oder des Tablet-Computers zumindest teilweise, insbesondere zu einem Großteil, vorteilhaft zu einem Anteil von mehr als 90 %, vorzugsweise komplett, zu halten und/oder zu tragen. Insbesondere ist das Sitzbauteil dazu vorgesehen, die Gewichtskraft der Befestigungseinheit und/oder des Tablet-Computers, insbesondere direkt, vorteilhaft indirekt an zumindest einen Boden, insbesondere an einen Boden einer Passagierkabine eines Flugzeugs, zu übertragen. Unter "vorgesehen" soll insbesondere speziell programmiert, ausgelegt und/oder ausgestattet verstanden werden. Durch eine erfindungsgemäße Ausgestaltung ist vorteilhaft ein Tablet-Computer an einem Sitzbauteil von einem Passagier und/oder einem Flugzeugpersonal austauschbar und bedienbar befestigt werden, wodurch ein hoher Komfort erreicht werden kann. Zudem kann durch die an dem Sitzbauteil angeordnete Befestigungseinheit eine sichere Befestigung des Tablet-Computers an dem Sitzbauteil erreicht werden.

Ferner wird vorgeschlagen, dass das Sitzbauteil als eine Rückenlehne ausgebildet ist und zumindest eine Lagereinheit aufweist, die dazu vorgesehen ist, den Tablet-Computer schwenkbar an dem Sitzbauteil zu lagern. Insbesondere soll unter einer "Rückenlehne" zusätzlich zu einer Rückenlehne als solcher ebenfalls eine Rückenlehnenstruktur und/oder ein Rückenlehnenrahmen und/oder eine Rückenlehnenpolsterung und/oder ein die Rückenlehne umgebender Schalenkörper verstanden werden. Unter einer "Lagereinheit" soll insbesondere eine Einheit verstanden werden, die dazu vorgesehen ist, die Befestigungseinheit direkt und/oder indirekt schwenkbar an dem Sitzbauteil zu lagern. Insbesondere weist die Lagereinheit zumindest eine Lagereinheitenschwenkachse auf, mittels der die Befestigungseinheit direkt an dem Sitzbauteil schwenkbar gelagert ist. Insbesondere ist die Lagereinheit dazu vorgesehen, zumindest ein weiteres Bauteil, an dem die Befestigungseinheit angeordnet ist, mittels der Lagereinheit an dem Sitzbauteil schwenkbar zu befestigen. Insbesondere ist die Lagereinheit dazu vorgesehen, die Befestigungseinheit mittels des weiteren Bauteils schwenkbar an dem Sitzbauteil zu befestigen. Insbesondere ist die Lagereinheitenschwenkachse zumindest teilweise, insbesondere zu einem Großteil, vorteilhaft komplett, an dem Sitzbauteil angeordnet. Insbesondere ist die Lagereinheitenschwenkachse zumindest im Wesentlichen parallel zu einer Aufständerfläche eines das Sitzbauteil aufweisenden Flugzeugsitzes. Insbesondere ist die Lagereinheitenschwenkachse zumindest im Wesentlichen parallel zu einer Oberfläche des Sitzbauteils. Alternativ ist denkbar, dass die Lagereinheitenschwenkachse zumindest im Wesentlichen senkrecht zu der Aufständerfläche ausgerichtet ist. Unter der Wendung, dass eine Gerade und/oder Ebene "zumindest im Wesentlichen parallel" zu einer weiteren, von der einen Gerade und/oder Ebene getrennt ausgebildeten Gerade und/oder Ebene ausgerichtet ist, soll insbesondere verstanden werden, dass die Gerade und/oder Ebene mit der weiteren Gerade und/oder Ebene einen Winkel einschließt, der um weniger als 15°, vorzugsweise um weniger als 10° und insbesondere um weniger als5° von einem Winkel von 0° abweicht. Dadurch kann vorteilhaft der Tablet-Computer flexibel an dem als Rückenlehne ausgebildeten Sitzbauteil gelagert werden. Zudem kann vorteilhaft ein Passagier, der auf einem weiteren Flugzeugsitz sitzt, der direkt hinter dem das Sitzbauteil aufweisenden Flugzeugsitz angeordnet ist, bequem seinen Tablet-Computer an dem als Rückenlehne ausgebildeten Sitzbauteil austauschbar und bedienbar befestigen.

Zudem wird vorgeschlagen, dass das Sitzbauteil als eine Rückenlehne ausgebildet ist und die Befestigungseinheit zumindest ein Klemmelement aufweist, das beweglich an dem Sitzbauteil angebunden ist. Unter einem "Klemmelement" soll insbesondere ein Element verstanden werden, das dazu vorgesehen ist, den Tablet-Computer mittels zumindest einer Klemmkraft in zumindest einer Position zu halten. Insbesondere ist das Klemmelement mittels der Lagereinheit, insbesondere mittels der Lagereinheitenschwenkachse, an dem Sitzbauteil schwenkbar gelagert. Insbesondere weist das Klemmelement zumindest zwei Klemmelementteilbereiche auf, die dazu vorgesehen sind, mittels zumindest eines Spannelements, beispielsweise einer Feder und/oder einer elastischen Ausgestaltung zumindest eines Bereichs des Klemmelements, den Tablet-Computer in zumindest einer Position festzuklemmen. Insbesondere ist das Klemmelement mittels der Lagereinheitenschwenkachse direkt an dem Sitzbauteil schwenkbar befestigt und dazu vorgesehen, den Tablet-Computer zwischen dem Klemmelement und dem Sitzbauteil in zumindest einer Position festzuklemmen. Insbesondere ist das Klemmelement an zumindest einem Ende des Klemmelements an dem Sitzbauteil verschiebbar, insbesondere mittels einer Befestigungsschiene, angeordnet. Dadurch kann vorteilhaft der Tablet-Computer mittels des Klemmelements schnell an dem Sitzbauteil austauschbar und bedienbar befestigt werden. Zudem kann vorteilhaft durch die bewegliche Lagerung des Klemmelements der Tablet-Computer flexibel an dem Sitzbauteil befestigt werden.

Weiterhin wird vorgeschlagen, dass das Sitzbauteil als eine Rückenlehne ausgebildet ist und zumindest einen Sitzbezug umfasst, wobei die Befestigungseinheit zumindest teilweise in dem Sitzbezug des Sitzbauteils integriert ist. Insbesondere sind der Sitzbezug und die Befestigungseinheit zumindest im Wesentlichen einstückig ausgebildet. Beispielsweise ist die Befestigungseinheit an den Sitzbezug angenäht und/oder stoffschlüssig und/oder kraftschlüssig mit dem Sitzbezug verbunden. Alternativ ist denkbar, dass die Befestigungseinheit und der Sitzbezug lösbar, insbesondere werkzeuglos lösbar, miteinander verbunden sind. Beispielsweise könnten die Befestigungseinheit und der Sitzbezug mittels eines Klettverschlusses miteinander lösbar verbunden sein. Alternativ oder zusätzlich könnte die Befestigungseinheit direkt an dem Sitzbauteil, insbesondere unter Vermeidung eines Sitzbezugs, integriert und/oder befestigt, insbesondere lösbar befestigt und/oder mittels zumindest eines Werkzeugs befestigt, beispielsweise mittels zumindest einer Sicherungsschraube, sein. Insbesondere sind der Sitzbezug und die Befestigungseinheit aus einem Stück ausgebildet. Unter einem "Sitzbezug" soll insbesondere eine Einheit verstanden werden, die werkzeuglos lösbar an dem Sitzbauteil befestigt ist. Insbesondere bedeckt der Sitzbezug in einem an dem Sitzbauteil befestigten Zustand das Sitzbauteil zumindest zu einem Großteil, insbesondere zu einem Anteil von mehr als 80 % und vorteilhaft von mehr als 90 %. Insbesondere ist der Sitzbezug als eine von einer Polsterung differierende Einheit ausgebildet. Dadurch kann vorteilhaft der Tablet-Computer an dem Sitzbauteil platzsparend und dennoch sicher, austauschbar und bedienbar befestigt werden.

Ferner wird vorgeschlagen, dass das Sitzbauteil als eine Armlehne ausgebildet ist und die Befestigungseinheit zumindest ein Befestigungselement aufweist, das dazu vorgesehen ist, den Tablet-Computer an dem Sitzbauteil austauschbar und bedienbar zu befestigen. Insbesondere ist das Befestigungselement beweglich, insbesondere schwenkbar, an dem Sitzbauteil befestigt. Insbesondere ist das Befestigungselement dazu vorgesehen, den Tablet-Computer beweglich, insbesondere schwenkbar, an dem Sitzbauteil zu befestigen. Dadurch kann vorteilhaft der Tablet-Computer an einem als eine Armlehne ausgebildeten Sitzbauteil beweglich, austauschbar und bedienbar mittels des Befestigungselements befestigt werden, wodurch eine hohe Flexibilität erreicht werden kann.

Zudem wird vorgeschlagen, dass die Befestigungseinheit zumindest einen Rahmen zu einer Lagerung des Tablet-Computers aufweist. Beispielsweise könnten Seitenteile des Rahmens, insbesondere zu einer Einstellung verschiedener Größen und Ausgestaltungen an Tablet-Computern, verschiebbar sein. Insbesondere ist ein Seitenteil des Rahmens zumindest im Wesentlichen senkrecht zu der Aufständerfläche ausgerichtet. Unter einem "Rahmen" soll insbesondere eine Einheit verstanden werden, die in einem befestigten Zustand des Tablet-Computers den Tablet-Computer bei einer Projektion auf zumindest eine Ebene zumindest teilweise, insbesondere über einen Winkelbereich von mehr als 180°, insbesondere von mehr als 270° und vorteilhatf von mehr als 300° umgibt. Insbesondere spannt der Rahmen zumindest eine Ebene auf, innerhalb welcher ein Schwerpunkt des Tablet-Computers angeordnet ist. Insbesondere bildet der Rahmen in einem befestigten Zustand des Tablet-Computers eine seitliche Begrenzung des Tablet-Computers aus. Dadurch kann vorteilhaft der Tablet-Computer in einem befestigten Zustand seitlich eingefasst und damit sicher gelagert werden.

Weiterhin wird vorgeschlagen, dass das Sitzbauteil zumindest eine Ausnehmung aufweist, in der die Lagereinheit zumindest zu einem Großteil angeordnet ist. Insbesondere ist die Lagereinheit zu einem Massenanteil von mehr als 70 %, insbesondere von mehr als 80% und vorteilhaft von mehr als 90 % innerhalb der Ausnehmung angeordnet. Insbesondere ist die Lagereinheitenschwenkachse innerhalb der Ausnehmung angeordnet. Insbesondere ist ein Kontaktbereich der Lagereinheit und des Sitzbauteils innerhalb der Ausnehmung des Sitzbauteils angeordnet. Insbesondere ist die Befestigungseinheit dazu vorgesehen, zumindest in einer Verstaustellung zumindest zu einem Großteil in der Ausnehmung des Sitzbauteils gelagert zu sein. Dadurch kann vorteilhaft die Lagereinheit sicher, platzsparend und geschützt an dem Sitzbauteil angebracht sein. Zudem kann vorteilhaft die Lagereinheit und/oder die Befestigungseinheit bei einer Abwesenheit des Tablet-Computers in der Ausnehmung des Sitzbauteils gelagert werden.

Ferner wird vorgeschlagen, dass das Sitzbauteil zumindest eine Gegenstandshalteeinheit aufweist, wobei die Befestigungseinheit als ein Adapterbauteil der Gegenstandshalteeinheit ausgebildet ist. Insbesondere ist die Gegenstandshalteeinheit mittels der Lagereinheit, insbesondere mittels der Lagereinheitenschwenkachse, an dem Sitzbauteil, vorteilhaft schwenkbar, gelagert. Insbesondere ist die Gegenstandshalteeinheit dazu vorgesehen, zumindest einen Gegenstand, insbesondere einen Monitor, in zumindest einer Position zu halten. Insbesondere ist der Gegenstand als ein von einem Tablet-Computer differierender Gegenstand ausgebildet. Alternativ zu einer Ausbildung als Monitor könnte der Gegenstand als ein Tisch und/oder eine Lampe ausgebildet sein. Unter einem "Adapterbauteil" soll insbesondere eine Einheit verstanden werden, die dazu vorgesehen ist, an zumindest eine bestehende Anordnung, insbesondere an die Gegenstandshalteeinheit, angebracht zu werden. Insbesondere ist das Adapterbauteil speziell zu einer Kopplung mit der bereits bestehenden, vorteilhaft bereits fertig montierten Anordnung vorgesehen. Dadurch kann vorteilhaft eine bereits vorhandene Gegenstandshalteeinheit zu einer Befestigung des Tablet-Computers ausgenutzt werden, wodurch Gewicht, Montageaufwand und Montagekosten reduziert werden können. Zudem kann vorteilhaft eine hohe Flexibilität erreicht werden.

Zudem wird vorgeschlagen, dass die Befestigungseinheit zumindest eine Klammer aufweist, die dazu vorgesehen ist, in zumindest einem Betriebszustand den Tablet-Computer einzuklemmen. Insbesondere ist das Klemmelement als die Klammer ausgebildet und dazu vorgesehen, in zumindest einem Betriebszustand den Tablet-Computer einzuklemmen. Dadurch kann vorteilhaft der Tablet-Computer fest, insbesondere rutschfest, in einer Position gehalten werden, wodurch der Tablet-Computer bequem und unter Vermeidung eines Verrutschens bedient werden kann.

Weiterhin wird vorgeschlagen, dass das Klemmelement als ein schwenkbar an dem Sitzbauteil gelagertes Exzenterelement ausgebildet ist. Insbesondere ist die Lagereinheitenschwenkachse, mittels der das als das Exzenterelement ausgebildete Klemmelement an dem Sitzbauteil schwenkbar gelagert ist, zumindest im Wesentlichen parallel zu der Aufständerfläche ausgerichtet. Insbesondere ist die Lagereinheitenschwenkachse, mittels der das als das Exzenterelement ausgebildete Klemmelement an dem Sitzbauteil schwenkbar gelagert ist, zumindest im Wesentlichen senkrecht zu der Oberfläche des Sitzbauteils ausgerichtet. Unter einem "Exzenterelement" soll insbesondere ein schwenkbar gelagertes Element verstanden werden, dessen Schwenkachse, insbesondere die Lagereinheitenschwenkachse, von einem Mittelpunkt des Exzenterelements getrennt angeordnet ist. Dadurch kann vorteilhaft der Tablet-Computer flexibel, sicher, austauschbar und bedienbar an dem Sitzbauteil befestigt werden.

Ferner wird vorgeschlagen, dass das Klemmelement als ein verschiebbar an dem Sitzbauteil gelagertes Band ausgebildet ist. Insbesondere ist das Band als ein elastisches Band ausgebildet. Insbesondere ist das elastische Band wiederholt verformbar, ohne dass dadurch das elastische Band mechanisch beschädigt und/oder zerstört wird. Insbesondere strebt das elastische Band nach einer Verformung selbstständig wieder einer Grundform zu. Alternativ zu dem elastischen Band ist ein festes Band, insbesondere ein Halteband, denkbar. Beispielsweise könnte das feste Band aus einem Kunststoff ausgebildet sein. Alternativ könnte das feste Band aus einem, einem Fachmann als sinnvoll erscheinenden Material ausgebildet sein. Weiterhin ist denkbar, dass die Befestigungseinheit zumindest eine Verstelleinheit aufweist, die dazu vorgesehen ist, das Band zu regulieren. Insbesondere ist die Verstelleinheit dazu vorgesehen, zumindest eine Bandlänge einzustellen. Dadurch kann vorteilhaft ein einfach und flexibel bedienbares Klemmelement zu einer Befestigung des Tablet-Computers verwendet werden.

Zudem wird vorgeschlagen, dass das Sitzbauteil zumindest eine Befestigungsschiene aufweist, die zu einer beweglichen Lagerung zumindest eines Bandteilbereichs des elastischen Bands vorgesehen ist. Insbesondere weist das Sitzbauteil zumindest zwei, vorteilhaft zumindest vier Befestigungsschienen auf, die jeweils zu einer beweglichen Lagerung zumindest eines Bandteilbereichs des elastischen Bands vorgesehen sind. Alternativ zu der Befestigungsschiene ist denkbar, dass das Sitzbauteil zumindest ein Langloch, zumindest eine Führung und/oder zumindest eine positionsgebende Öffnung aufweist, die zu einer beweglichen Lagerung zumindest eines Bandteilbereichs des Bands vorgesehen ist. Dadurch kann vorteilhaft das als das elastische Band ausgebildete Klemmelement mittels der Befestigungsschienen an dem Sitzbauteil verschiebbar geführt werden, wodurch auf einfache, angenehme Weise eine Anpassung einer Position des Klemmelements an eine Größe des Tablet-Computers erreicht werden kann.

Weiterhin wird vorgeschlagen, dass der Sitzbezug des Sitzbauteils zumindest einen materialverstärkten Sitzbezugteilbereich mit aufweist. Insbesondere weist der materialverstärkte Sitzbezugteilbereich zumindest eine hohe Festigkeit und/oder Stabilität auf. Unter einem "materialverstärkten Sitzbezugteilbereich" soll insbesondere ein Bereich verstanden werden, der in einem Vergleich zu einem von dem Bereich beabstandeten Bereich eine dickere Materialstärke aufweist und/oder aus einem Material mit einer höheren Festigkeit und/oder Stabilität ausgebildet ist. Dadurch kann vorteilhaft ein kritischer Sitzbezugteilbereich stabilisiert werden, wodurch eine langlebige Befestigungseinheit erreicht werden kann.

Ferner wird vorgeschlagen, dass die Befestigungseinheit zu einer drahtlosen Energieübertragung vorgesehen ist. Insbesondere ist die Befestigungseinheit dazu vorgesehen, den Tablet-Computer mittels der drahtlosen Energieübertragung mit elektrischer Energie zu versorgen. Beispielsweise könnte die Befestigungseinheit zu einer kapazitiven und/oder zu einer elektromagnetischen Energieübertragung vorgesehen sein. Ebenfalls denkbar ist, dass die Befestigungseinheit zu einer drahtlosen Energieübertragung mittels Laser und/oder mittels Ultraschall vorgesehen ist. Insbesondere ist die Befestigungseinheit zu einer induktiven Energieübertragung, insbesondere zu einem induktiven Laden, vorgesehen. Insbesondere weist die Befestigungseinheit zumindest einen Transmitter, insbesondere zumindest eine Transmitterspule, auf, die dazu vorgesehen ist, zumindest ein elektromagnetisches Wechselfeld zu der drahtlosen Energieübertragung zu erzeugen. Insbesondere ist der Transmitter dazu vorgesehen, mittels des elektromagnetischen Wechselfelds zumindest einen Tablet-Computer mit elektrischer Energie zu versorgen. Insbesondere ist der Transmitter dazu vorgesehen, in zumindest einer Lagereinheit, einem Klemmelement, einem Sitzbezug und/oder einem Befestigungselement integriert und/oder befestigt zu sein. Alternativ zu einer drahtlosen Energieübertragung könnte die Befestigungseinheit zu einer Energieübertragung mittels zumindest eines Leitungselements, insbesondere zumindest eines Kabels, vorgesehen sein. Hierbei könnte die Befestigungseinheit zumindest ein Anschlussmittel, insbesondere einen USB-Anschluss, zu einem Anschließen des Leitungselements aufweisen. Dadurch kann vorteilhaft der Tablet-Computer drahtlos mit elektrischer Energie versorgt werden.

### Zeichnungen

Weitere Vorteile ergeben sich aus der folgenden Zeichnungsbeschreibung. In der Zeichnung sind Beispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.
- Fig. 1: einen Ausschnitt eines Flugzeugsitzes mit einer Flugzeugsitzbefestigungsvorrichtung in einer Verstaustellung in einer perspektivischen Darstellung,
- Fig. 2: den Flugzeugsitz mit der Flugzeugsitzbefestigungsvorrichtung aus Fig. 1 in einer Schwenkstellung,
- Fig. 3: einen Ausschnitt eines Flugzeugsitzes mit einer Flugzeugsitzbefestigungsvorrichtung in einer Schnittdarstellung, wobei eine Schnittebene senkrecht zu einer Aufständerfläche des Flugzeugsitzes ausgerichtet ist,
- Fig. 4: einen Ausschnitt eines Flugzeugsitzes mit einer Flugzeugsitzbefestigungsvorrichtung in einer Verstaustellung in einer Schnittdarstellung, wobei eine Schnittebene senkrecht zu einer Aufständerfläche des Flugzeugsitzes ausgerichtet ist,
- Fig. 5: den Flugzeugsitz mit der Flugzeugsitzbefestigungsvorrichtung aus Fig. 4 in einer Schwenkstellung,
- Fig. 6: einen Ausschnitt eines Flugzeugsitzes mit einer Flugzeugsitzbefestigungsvorrichtung in einer Ansicht von hinten,
- Fig. 7: einen Ausschnitt eines Flugzeugsitzes mit einer Flugzeugsitzbefestigungsvorrichtung in einer Ansicht von hinten,
- Fig. 8: einen Ausschnitt eines Flugzeugsitzes mit einer Flugzeugsitzbefestigungsvorrichtung in einer perspektivischen Darstellung,
- Fig. 9: einen Ausschnitt eines Flugzeugsitzes mit einer Flugzeugsitzbefestigungsvorrichtung in einer perspektivischen Darstellung und
- Fig. 10: einen Ausschnitt eines Flugzeugsitzes mit einer erfindungsgemäßen Flugzeugsitzbefestigungsvorrichtung in einer perspektivischen Darstellung.

### Beschreibung der Ausführungsbeispiele

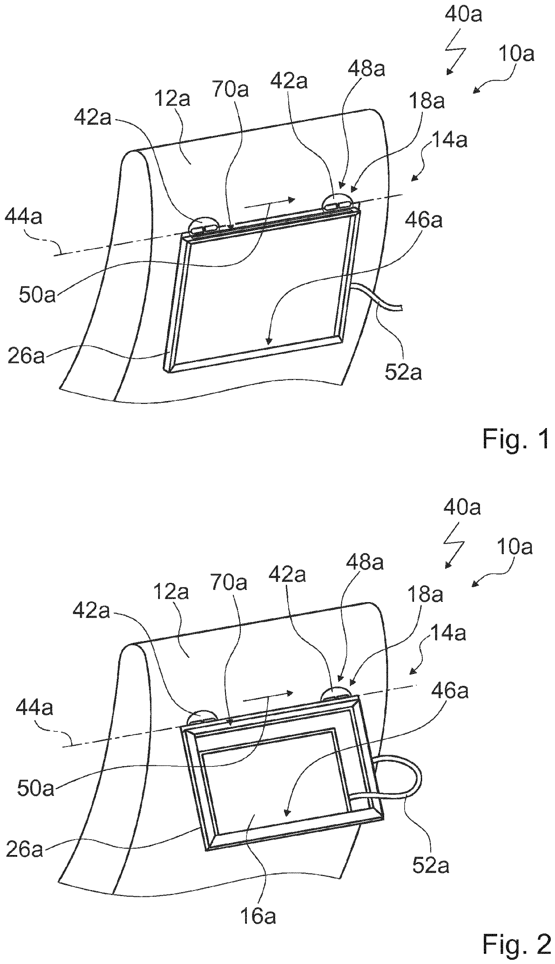

Fig. 1 zeigt ein Beispiel einer Flugzeugsitzbefestigungsvorrichtung. Die Flugzeugsitzbefestigungsvorrichtung 10a weist ein Sitzbauteil 12a auf, das als eine Rückenlehne ausgebildet ist. Die Flugzeugsitzbefestigungsvorrichtung 10a weist eine Lagereinheit 18a und eine Befestigungseinheit 14a auf, die an dem Sitzbauteil 12a angeordnet ist. Die Befestigungseinheit 14a weist einen Rahmen 26a zu einer Lagerung eines Tablet-Computers 16a auf. Die Lagereinheit 18a ist dazu vorgesehen, die Befestigungseinheit 14a schwenkbar an dem Sitzbauteil 12a zu lagern. Hierbei weist die Lagereinheit 18a eine Lagereinheitenschwenkachse 44a auf, mittels der die Befestigungseinheit 14a schwenkbar an dem Sitzbauteil 12a gelagert ist. Die Lagereinheit 18a weist zwei Lagerelemente 42a auf, die jeweils als ein Gelenk ausgebildet sind. Die Lagerelemente 42a sind an zwei einander gegenüberliegenden Enden des Rahmens 26a der Befestigungseinheit 14a schwenkbar mit dem Rahmen 26a verbunden. Die Lagereinheitenschwenkachse 44a ist als eine obere Schwenkachse ausgebildet und in einem oberen Bereich des Rahmens 26a angeordnet.

Die Lagereinheit 18a ist dazu vorgesehen, den Tablet-Computer 16a schwenkbar an dem Sitzbauteil 12a zu lagern. Die Befestigungseinheit 14a ist mittels der schwenkbaren Lagerung durch die Lagereinheit 18a aus einer Verstaustellung an dem Sitzbauteil 12a in eine Schwenkstellung bringbar. In Fig. 2 ist die Befestigungseinheit 14a in einer Schwenkstellung mit dem von der Befestigungseinheit 14a befestigten Tablet-Computer 16a dargestellt. Die Lagereinheit 18a weist eine Fixiereinheit 48a auf, die zu einer Fixierung der Befestigungseinheit 14a in mehreren Stellungen vorgesehen ist. Die Fixiereinheit 48a ist innerhalb der Lagerelemente 42a angeordnet. Die Fixiereinheit 48a ist mittels einer parallel zu der Lagereinheitenschwenkachse 44a ausgerichteten Verschiebungsrichtung 50a der Befestigungseinheit 14a betätigbar. Um die Befestigungseinheit 14a aus der Verstaustellung in eine Schwenkstellung zu bewegen, muss zunächst die Fixiereinheit 48a entriegelt werden. Zu einer Entriegelung der Fixiereinheit 48a ist eine parallel zu der Lagereinheitenschwenkachse 44a ausgerichtete Verschiebung der Befestigungseinheit 14a nötig. In dieser verschobenen Stellung ist die Befestigungseinheit 14a schwenkbar um die Lagereinheitenschwenkachse 44a. Somit ist eine gewünschte Schwenkstellung der Befestigungseinheit 14a einstellbar. Zu einer Fixierung der Befestigungseinheit 14a in einer gewünschten Schwenkstellung ist die Befestigungseinheit 14a entgegen der Verschiebungsrichtung 50a zu verschieben.

Die Befestigungseinheit 14a ist dazu vorgesehen, in einem Betriebszustand den Tablet-Computer 16a an dem Sitzbauteil 12a austauschbar und bedienbar zu befestigen. Die Befestigungseinheit 14a ist dazu vorgesehen, den Tablet-Computer 16a jederzeit von einem Passagier entnehmbar mittels der Befestigungseinheit 14a an dem Sitzbauteil 12a austauschbar und bedienbar zu befestigen. Der Rahmen 26a der Befestigungseinheit 14a weist eine Befestigungsnut 46a auf, die dazu vorgesehen ist, den Tablet-Computer 16a aufzunehmen. Die Befestigungsnut 46a erstreckt sich über drei der Lagereinheitenschwenkachse 44a abgewandte Seiten des Rahmens 26a. Alternativ könnte sich die Befestigungsnut 46a lediglich über eine der Lagereinheit 18a abgewandte Seite des Rahmens 26a erstrecken. An der der Lagereinheitenschwenkachse 44a zugewandten Seite weist der Rahmen 26a eine Einbringöffnung 70a auf, die zu einer Einbringung des Tablet-Computers 16a vorgesehen ist. Die Befestigungseinheit 14a ist dazu vorgesehen, den Tablet-Computer 16a mittels einer Gewichtskraft des Tablet-Computers 16a an dem Sitzbauteil 12a zu befestigen. Alternativ ist denkbar, dass die Befestigungseinheit 14a Befestigungsmittel, beispielsweise zu einer Klemmung, aufweist, um den Tablet-Computer 16a zu befestigen. Die Befestigungseinheit 14a ist dazu vorgesehen, Tablet-Computer 16a verschiedener Größen und Ausgestaltungen mittels der Befestigungsnut 46a des Rahmens 26a an dem Sitzbauteil 12a zu befestigen.

Die Flugzeugsitzbefestigungsvorrichtung 10a umfasst ein Leitungselement 52a, das dazu vorgesehen ist, den Tablet-Computer 16a mit elektrischer Energie zu versorgen. Zudem könnte das Leitungselement 52a dazu vorgesehen sein, den Tablet-Computer 16a an eine Flugzeugelektronik, beispielsweise an ein Bord-Unterhaltungsprogramm und/oder an eine Fluginformation, anzubinden. Das Leitungselement 52a ist von einer Aufständerfläche des Flugzeugsitzes 40a aus über das Sitzbauteil 12a zu der Befestigungseinheit 14a geführt. Hierbei ist das Leitungselement 52a innerhalb des Sitzbauteils 12a sowie teilweise innerhalb der Befestigungseinheit 14a angeordnet. Das Leitungselement 52a ist von dem Sitzbauteil 12a in den Rahmen 26a der Befestigungseinheit 14a geführt.

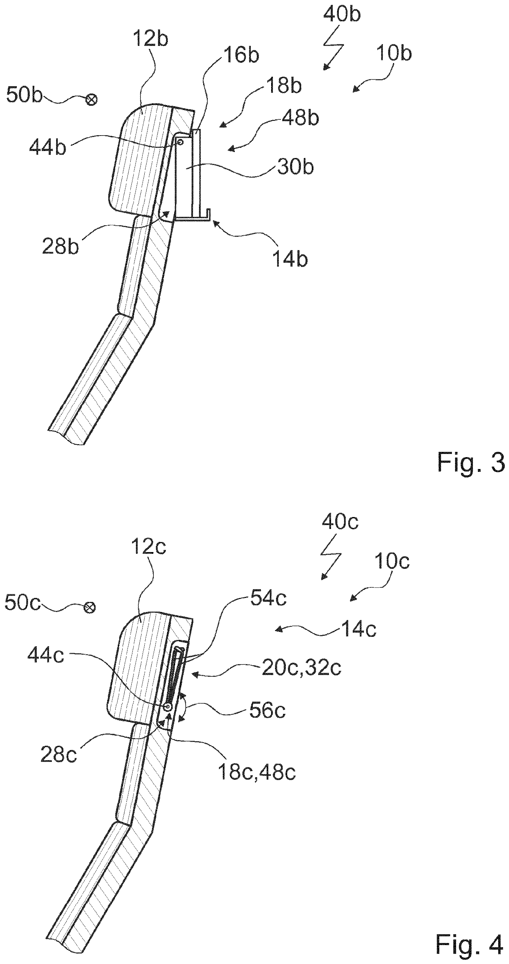

Die nachfolgenden Beschreibungen und die Zeichnung beschränken sich im Wesentlichen auf die Unterschiede zwischen den Beispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Beispiele, insbesondere der Fig. 1 und 2, verwiesen werden kann. Zur Unterscheidung der Beispiele ist der Buchstabe a den Bezugszeichen des Beispiels in Fig. 1 und 2 nachgestellt. In den Beispielen der Fig. 3 bis 10 ist der Buchstabe a durch die Buchstaben b bis h ersetzt.

Fig. 3 ein Beispiel einer Flugzeugsitzbefestigungsvorrichtung.

Die Flugzeugsitzbefestigungsvorrichtung 10b weist ein Sitzbauteil 12b, das als eine Rückenlehne ausgebildet ist, sowie eine Lagereinheit 18b auf. Das Sitzbauteil 12b weist eine Ausnehmung 28b auf, in der die Lagereinheit 18b angeordnet ist. Die Lagereinheit 18b ist dazu vorgesehen, einen Tablet-Computer 16b schwenkbar an dem Sitzbauteil 12b zu lagern. Die Lagereinheit 18b weist eine Lagereinheitenschwenkachse 44b auf, mittels der eine Gegenstandshalteeinheit 30b schwenkbar an dem Sitzbauteil 12b gelagert ist. Die Lagereinheitenschwenkachse 44b ist als eine obere Schwenkachse der Gegenstandshalteeinheit 30b ausgebildet und in einem oberen Bereich der Gegenstandshalteeinheit 30b angeordnet. Die Gegenstandshalteeinheit 30b ist zu einer Halterung eines Monitors vorgesehen. Das Sitzbauteil 12b weist die Gegenstandshalteeinheit 30b auf und ist dazu vorgesehen, die Gegenstandshalteeinheit 30b mittels der Lagereinheitenschwenkachse 44b an dem Sitzbauteil 12b schwenkbar zu lagern.

Die Flugzeugsitzbefestigungsvorrichtung 10b weist zusätzlich zu der Lagereinheit 18a eine Befestigungseinheit 14b auf, die an dem Sitzbauteil 12b angeordnet ist. Die Lagereinheit 18b ist dazu vorgesehen, die Befestigungseinheit 14b schwenkbar an dem Sitzbauteil 12b zu lagern. Hierbei ist die Lagereinheit 18b dazu vorgesehen, die Befestigungseinheit 14b mittels der Gegenstandshalteeinheit 30b schwenkbar an dem Sitzbauteil 12b zu lagern. Die Befestigungseinheit 14b ist dazu vorgesehen, in einem Betriebszustand einen Tablet-Computer 16b an dem Sitzbauteil 12b austauschbar und bedienbar zu befestigen. Die Befestigungseinheit 14b ist dazu vorgesehen, an der Gegenstandshalteeinheit 30b des Sitzbauteils 12b befestigt zu werden. Hierbei ist die Befestigungseinheit 14b als ein Adapterbauteil der Gegenstandshalteeinheit 30b ausgebildet. Die Befestigungseinheit 14b ist dazu vorgesehen, an einem der Lagereinheitenschwenkachse 44b entgegengesetzten Ende der Gegenstandshalteeinheit 30b an der Gegenstandshalteeinheit 30b montiert zu werden. Die Befestigungseinheit 14b weist bei einer Betrachtung in einer Querschnittsebene eine im Wesentlichen L-förmige Gestalt auf, die dazu vorgesehen ist, den Tablet-Computer 16b aufzunehmen. Die Befestigungseinheit 14b ist dazu vorgesehen, den Tablet-Computer 16b mittels einer Gewichtskraft des Tablet-Computers 16b an dem Sitzbauteil 12b zu befestigen. Alternativ ist denkbar, dass die Befestigungseinheit 14b Befestigungsmittel, beispielsweise zu einer Klemmung, aufweist, um den Tablet-Computer 16b zu befestigen. Die Befestigungseinheit 14b ist dazu vorgesehen, Tablet-Computer 16b verschiedener Größen und Ausgestaltungen mittels der L-förmigen Gestalt an dem Sitzbauteil 12b zu befestigen.

In einem austauschbar und bedienbar an dem Sitzbauteil 12b befestigten Zustand ist der Tablet-Computer 16b auf die L-förmige Gestalt der Befestigungseinheit 14b aufgestellt. Hierbei ist der Tablet-Computer 16b jederzeit von einem Passagier austauschbar mittels der Befestigungseinheit 14b an dem Sitzbauteil 12b befestigt. Die Lagereinheit 18b weist eine Fixiereinheit 48b auf, die zu einer Fixierung der Befestigungseinheit 14b in mehreren Stellungen vorgesehen ist. Hierbei ist die Fixiereinheit 48b zu einer Fixierung der Gegenstandshalteeinheit 30b und zeitgleich zu einer Fixierung der an der Gegenstandshalteeinheit 30b befestigten Befestigungseinheit 14b in mehreren Stellungen vorgesehen. Die Fixiereinheit 48b ist mittels einer parallel zu der Lagereinheitenschwenkachse 44b ausgerichteten Verschiebungsrichtung 50b betätigbar. Zu einer Entriegelung der Fixiereinheit 48b ist eine parallel zu der Lagereinheitenschwenkachse 44b ausgerichtete Verschiebung der Gegenstandshalteeinheit 30b und somit der Befestigungseinheit 14b nötig. In dieser verschobenen Stellung ist die Befestigungseinheit 14b schwenkbar um die Lagereinheitenschwenkachse 44b. Somit ist eine gewünschte Schwenkstellung der Befestigungseinheit 14b einstellbar. Zu einer Fixierung der Befestigungseinheit 14b in einer gewünschten Schwenkstellung ist die Gegenstandshalteeinheit 30b und damit die Befestigungseinheit 14b entgegen der Verschiebungsrichtung 50b zu verschieben.
Zusätzlich zu der schwenkbaren Lagerung mittels der Lagereinheit 18b ist die Befestigungseinheit 14b selbst veränderbar. Hierbei ist eine Form der Befestigungseinheit 14b, insbesondere eine Länge der Befestigungseinheit 14b, veränderbar. Die L-förmige Gestalt der Befestigungseinheit 14b ist als eine teleskopartige Konstruktion ausgestaltet. Alternativ zu der teleskopartigen Konstruktion sind weitere, einem Fachmann als sinnvoll erscheinende Ausbildungen zu einer Veränderung einer Länge denkbar. Eine Länge der L-förmigen Gestalt der Befestigungseinheit 14b in einer im Wesentlichen senkrecht zu einer Oberfläche der Gegenstandshalteeinheit 30b ausgerichteten Richtung ist mittels der teleskopartige Konstruktion veränderbar.

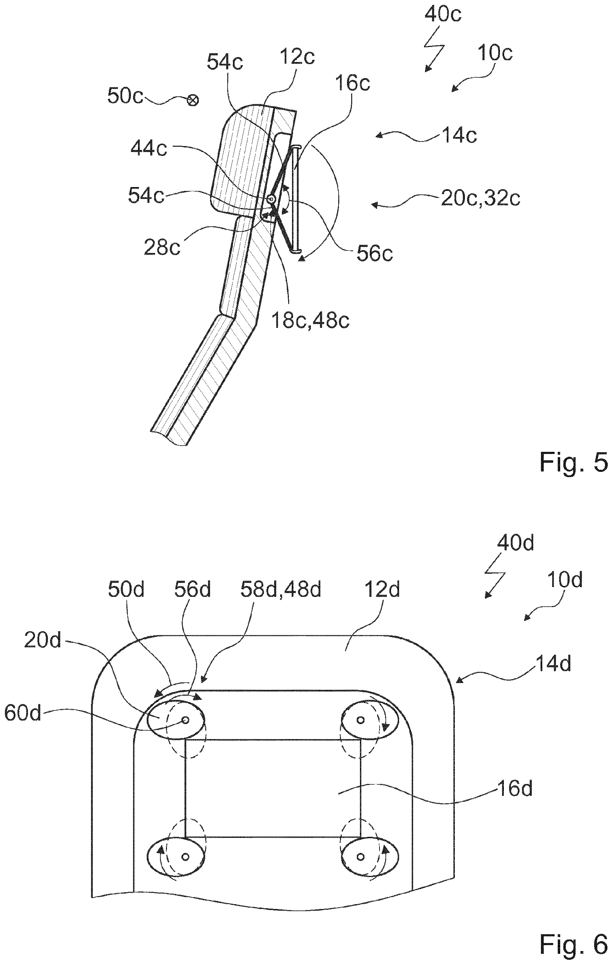

Fig. 4 und 5 zeigen ein Beispiel einer Flugzeugsitzbefestigungsvorrichtung. Die Flugzeugsitzbefestigungsvorrichtung 10c weist ein Sitzbauteil 12c, das als eine Rückenlehne ausgebildet ist, sowie eine Lagereinheit 18c auf, die dazu vorgesehen ist, einen Tablet-Computer 16c schwenkbar an dem Sitzbauteil 12c zu lagern. Das Sitzbauteil 12c weist eine Ausnehmung 28c auf, in der die Lagereinheit 18c angeordnet ist. Die Lagereinheit 18c weist eine Lagereinheitenschwenkachse 44c auf und ist dazu vorgesehen, eine Befestigungseinheit 14c schwenkbar an dem Sitzbauteil 12c zu lagern. Die Befestigungseinheit 14c ist dazu vorgesehen, in einem Betriebszustand einen Tablet-Computer 16c an dem Sitzbauteil 12c austauschbar und bedienbar zu befestigen.

Die Flugzeugsitzbefestigungsvorrichtung 10c weist die Befestigungseinheit 14c auf, die an dem Sitzbauteil 12c angeordnet ist. Hierbei ist die Befestigungseinheit 14c mittels der Lagereinheit 18c an dem Sitzbauteil 12c schwenkbar befestigt. Die Befestigungseinheit 14c ist mittels der Lagereinheitenschwenkachse 44c von einer Verstaustellung in eine Schwenkstellung bringbar an dem Sitzbauteil 12c angeordnet. Fig. 4 zeigt die Befestigungseinheit 14c in einer Verstaustellung. In Fig. 5 ist die Befestigungseinheit 14c in einer Schwenkstellung dargestellt. In der Verstaustellung ist die Befestigungseinheit 14c an dem Sitzbauteil 12c angeordnet. Hierbei ist die Befestigungseinheit 14c zu einem Großteil innerhalb der Ausnehmung 28c des Sitzbauteils 12c angeordnet. In der Verstaustellung ist die Lagereinheitenschwenkachse 44c als eine untere Schwenkachse ausgebildet und in einem unteren Bereich der Befestigungseinheit 14c angeordnet. Alternativ ist eine obere Schwenkachse, die in einem oberen Bereich der Befestigungseinheit 14c angeordnet ist, denkbar. Alternativ oder zusätzlich ist denkbar, dass die Lagereinheit 18c dazu vorgesehen ist, die Befestigungseinheit 14c in einer im Wesentlichen parallel zu einer Oberfläche des Sitzbauteils 12c ausgerichteten Schwenkebene schwenkbar zu lagern. Hierbei ist die Lagereinheit 18c dazu vorgesehen, einen mittels der Befestigungseinheit 14c befestigten Tablet-Computer schwenkbar zwischen einem Hochformat und einem Querformat zu lagern. Die Lagereinheit 18c ist dazu vorgesehen, die Befestigungseinheit 14c um jeweils 90° in zwei entgegengesetzte Richtungen schwenkbarzu lagern.

Die Befestigungseinheit 14c weist ein Klemmelement 20c auf, das beweglich an dem Sitzbauteil 12c angebunden ist. Hierbei ist das Klemmelement 20c mittels der Lagereinheit 18c an dem Sitzbauteil 12c schwenkbar gelagert. Das Klemmelement 20c ist als eine Klammer 32c ausgebildet und dazu vorgesehen, in einem Betriebszustand den Tablet-Computer 16c einzuklemmen. Hierzu muss zunächst die Befestigungseinheit 14c von der Verstaustellung mittels der Lagereinheit 18c in eine Schwenkstellung verschwenkt werden. Eine Bewegungsrichtung 56c der Befestigungseinheit 14c ist anhand eines Doppelpfeils dargestellt. Die Lagereinheit 18c weist eine Fixiereinheit 48c auf, die zu einer Fixierung der Befestigungseinheit 14c in mehreren Stellungen vorgesehen ist. Die Fixiereinheit 48c ist mittels einer parallel zu der Lagereinheitenschwenkachse 44c ausgerichteten Verschiebungsrichtung 50c der Befestigungseinheit 14c betätigbar. Zu einer Entriegelung der Fixiereinheit 48c ist eine parallel zu der Lagereinheitenschwenkachse 44c ausgerichtete Verschiebung der Befestigungseinheit 14c nötig. In dieser verschobenen Stellung ist die Befestigungseinheit 14c schwenkbar um die Lagereinheitenschwenkachse 44c. Somit ist eine gewünschte Schwenkstellung der Befestigungseinheit 14c einstellbar. Zu einer Fixierung der Befestigungseinheit 14c in einer gewünschten Schwenkstellung ist die Befestigungseinheit 14c entgegen der Verschiebungsrichtung 50c zu verschieben.

In einer Schwenkstellung ist eine Befestigung des Tablet-Computers 16c mittels des Klemmelements 20c der Befestigungseinheit 14c möglich. Das Klemmelement 20c weist zwei Klemmelementteilbereiche 54c auf, die die Klammer 32c ausbilden. In der Verstaustellung ist das Klemmelement 20c in einem geschlossenen Zustand angeordnet. Hierbei sind die Klemmelementteilbereiche 54c in der Verstaustellung in einem direkten flächigen Kontakt aneinander angeordnet. Die Klemmelementteilbereiche 54c sind mittels eines Spannelements gegeneinander verspannt. Das Spannelement ist als eine Feder ausgebildet. Beispielsweise könnte das Spannelement als eine Druckfeder, als eine Torsionsfeder und/oder als eine Blattfeder ausgebildet sein. Alternativ sind weitere, einem Fachmann als sinnvoll erscheinende Ausbildungen des Spannelements und/oder der Feder denkbar. Die Klemmelementteilbereiche 54c sind dazu vorgesehen, in einem kraftlosen Zustand durch eine von dem Spannelement auf die Klemmelementteilbereiche 54c ausgeübte Kraft einander zuzustreben. Das Spannelement ist in einem Kontaktbereich der Klemmelementteilbereiche 54c angeordnet. Zudem ist in dem Kontaktbereich der Klemmelementteilbereiche 54c die Lagereinheitenschwenkachse 44c angeordnet.

Das Klemmelement 20c ist dazu vorgesehen, in einem geschlossenen Zustand von der Verstaustellung in eine Schwenkstellung verschwenkt zu werden. Zudem ist das Klemmelement 20c dazu vorgesehen, nach einer Fixierung der Befestigungseinheit 14c mittels der Fixiereinheit 48c in einer Schwenkstellung von dem geschlossenen Zustand in einen geöffneten Zustand überführt zu werden. Alternativ könnte das Klemmelement 20c in der Verstaustellung und/oder während einer Bewegung von der Verstaustellung in eine Schwenkstellung von dem geschlossenen Zustand in den geöffneten Zustand überführt werden. Um das Klemmelement 20c von dem geschlossenen Zustand in einen geöffneten Zustand zu überführen, ist Kraft nötig, die entgegen einer Spannkraft des Spannelements gerichtet ist. In einem geöffneten Zustand ist das Klemmelement 20c dazu vorgesehen, den Tablet-Computer 16c aufzunehmen. Hierbei ist das Klemmelement 20c dazu vorgesehen, Tablet-Computer 16c verschiedener Größen und Ausgestaltungen aufzunehmen. Das Klemmelement 20c ist dazu vorgesehen, den Tablet-Computer 16c mittels der Klemmelementteilbereiche 54c einzuklemmen. Somit ist der Tablet-Computer 16c austauschbar und bedienbar mittels der Befestigungseinheit 14c an dem Sitzbauteil 12c befestigt.

Alternativ zu der Ausgestaltung des Klemmelements 20c ist denkbar, dass ein Klemmelement als eine Klemme ausgebildet ist. Hierbei weist das Klemmelement zwei Klemmelementteilbereiche auf, die gegeneinander mittels eines Spannelements vorgespannt sind. Das Klemmelement, insbesondere die beiden Klemmelementteilbereiche, ist im Wesentlichen parallel zu einer Oberfläche des Sitzbauteils ausgerichtet. Zudem ist das Klemmelement, insbesondere die beiden Klemmelementteilbereiche, im Wesentlichen senkrecht zu einer Aufständerfläche ausgerichtet. Beispielsweise könnte das Klemmelement zusätzlich schwenkbar relativ zu der Oberfläche des Sitzbauteils angeordnet sein. Die beiden Klemmelementteilbereiche sind in einer im Wesentlichen senkrecht zu der Aufständerfläche und im Wesentlichen parallel zu der Oberfläche des Sitzbauteils ausgerichteten Verschieberichtung gegeneinander verschiebbar gelagert. Hierbei sind die beiden Klemmelementteilbereiche dazu vorgesehen, aufgrund einer Spannkraft des Spannelements einander zuzustreben. Somit ist zu einem relativen Verschieben der beiden Klemmelementteilbereiche in einander entgegengesetzte, im Wesentlichen parallel zu der Verschieberichtung ausgerichtete Richtungen eine Überwindung der Spannkraft des Spannelements nötig. Insbesondere sind die beiden Klemmelementteilbereiche dazu vorgesehen, mittels einer äußeren Kraft gegeneinander verschoben zu werden. In einem verschobenen Zustand der beiden Klemmelementteilbereiche gegeneinander ist ein Tablet-Computer in das Klemmelement einbringbar. Nach Lösen der äußeren Kraft, insbesondere in einer Abwesenheit der äußeren Kraft, streben die beiden Klemmelementteilbereiche aufgrund der Spannkraft des Spannelements einander zu und klemmen hierdurch den Tablet-Computer fest und bedienbar ein. Somit ist eine, das Klemmelement aufweisende Befestigungseinheit dazu vorgesehen, in einem Betriebszustand den Tablet-Computer an dem Sitzbauteil austauschbar und bedienbar zu befestigen.

Alternativ zu einer Lagerung der Lagereinheit 18c in der Ausnehmung 28c des Sitzbauteils 12c könnte die Lagereinheit 18c in einem an dem Sitzbauteil 12c befestigten Esstisch integriert und/oder gelagert sein. Hierbei wäre die Befestigungseinheit in der Verstaustellung in dem Esstisch angeordnet. Ausgehend von der Verstaustellung wäre die Befestigungseinheit 14c mittels der Lagereinheit 18c analog zu obigem Ausführungsbeispiel in eine Schwenkstellung schwenkbar.

Fig. 6 zeigt ein Beispiel einer Flugzeugsitzbefestigungsvorrichtung. Die Flugzeugsitzbefestigungsvorrichtung 10d weist ein Sitzbauteil 12d, das als eine Rückenlehne ausgebildet ist, und eine Befestigungseinheit 14d auf, die an dem Sitzbauteil 12d angeordnet ist. Die Befestigungseinheit 14d ist dazu vorgesehen, in einem Betriebszustand einen Tablet-Computer 16d an dem Sitzbauteil 12d austauschbar und bedienbar zu befestigen. Die Befestigungseinheit 14d ist dazu vorgesehen, den Tablet-Computer 16d jederzeit von einem Passagier entnehmbar an dem Sitzbauteil 12d zu befestigen. Zudem ist die Befestigungseinheit 14d dazu vorgesehen, den Tablet-Computer 16d unter Vermeidung eines Verrutschens des Tablet-Computers 16d an dem Sitzbauteil 12d zu befestigen. Hierdurch ist eine Bedienung des Tablet-Computers 16d durch den Passagier in einem an dem Sitzbauteil 12d befestigten Zustand ermöglicht.

Die Befestigungseinheit 14d weist vier Klemmelemente 20d auf, die beweglich an dem Sitzbauteil 12d angebunden sind. In Fig. 6 ist der Übersichtlichkeit halber lediglich eines der Klemmelemente 20d mit einem Bezugszeichen versehen. In einem befestigten Zustand des Tablet-Computers 16d an dem Sitzbauteil 12d sind die Klemmelemente 20d in einem jeweiligen Bereich von Ecken des Tablet-Computers 16d angeordnet. In einer solchen Anordnung sind die Klemmelemente 20d dazu vorgesehen, Tablet-Computer 16d einer definierten Größe an dem Sitzbauteil 12d zu befestigen. Alternativ ist denkbar, dass das Sitzbauteil 12d eine einer Anzahl von Klemmelementen 20d entsprechende Anzahl von Befestigungsschienen 34d aufweist, die zu einer beweglichen Lagerung der Klemmelemente 20d vorgesehen sind, wobei die Klemmelemente 20d mittels der Befestigungsschienen 34d an dem Sitzbauteil 12d verschiebbar gelagert sind. Weiterhin könnte die Befestigungseinheit 14d lediglich zwei Klemmelemente 20d zu einer Befestigung des Tablet-Computers 16d aufweisen. Zudem ist eine, einem Fachmann als sinnvoll erscheinende Anzahl von Klemmelementen 20d denkbar. Im Folgenden wird lediglich eines der Klemmelemente 20d beschrieben.

Das Klemmelement 20d ist als ein schwenkbar an dem Sitzbauteil 12d gelagertes Exzenterelement ausgebildet. Das Sitzbauteil 12d weist eine Lagereinheit 58d auf, die dazu vorgesehen ist, die Befestigungseinheit 14d beweglich an dem Sitzbauteil 12d zu lagern. Hierbei ist die Lagereinheit 58d dazu vorgesehen, das Klemmelement 20d der Befestigungseinheit 14d schwenkbar an dem Sitzbauteil 12d zu lagern. Die Lagereinheit 58d weist eine Lagereinheitenschwenkachse 60d auf, mittels der die Befestigungseinheit 14d schwenkbar an dem Sitzbauteil 12d gelagert ist. Hierbei ist die Lagereinheitenschwenkachse 60d dazu vorgesehen, das Klemmelement 20d schwenkbar an dem Sitzbauteil 12d anzubinden. Das Klemmelement 20d weist bei einer Betrachtung in einer im Wesentlichen parallel zu einer Oberfläche des Sitzbauteils 12d verlaufenden Querschnittsebene eine im Wesentlichen ovale, insbesondere ellipsenförmige Gestalt auf.

Fig. 6 zeigt in durchgezogenen Linien eine Verstaustellung des Klemmelements 20d. In der Verstaustellung des Klemmelements 20d ist der Tablet-Computer 16d austauschbar, insbesondere an dem Sitzbauteil 12d anbringbar und/oder von dem Sitzbauteil 12d entfernbar. Das Klemmelement 20d ist mittels eines Spannelements vorgespannt gelagert und dazu vorgesehen, bei Abwesenheit einer äußeren Kraft in die Verstaustellung zurückzustreben. Ausgehend von der Verstaustellung, ist das Klemmelement 20d um die Lagereinheitenschwenkachse 60d in einer Bewegungsrichtung 56d in eine Befestigungsstellung schwenkbar. Das Klemmelement 20d ist dazu vorgesehen, den Tablet-Computer 16d in einer Befestigungsstellung an dem Sitzbauteil 12d einzuklemmen. In einer Befestigungsstellung ist das Klemmelement 20d dazu vorgesehen, den Tablet-Computer 16d zwischen dem Sitzbauteil 12d und dem Klemmelement 20d einzuklemmen. Eine Befestigungsstellung ist in Fig. 6 in gestrichelten Linien dargestellt. Die Lagereinheit 58d weist eine Fixiereinheit 48d auf, die zu einer Fixierung der Befestigungseinheit 14d in mehreren Stellungen vorgesehen ist. Hierbei ist die Fixiereinheit 48d zu einer Fixierung des Klemmelements 20d in mehreren Stellungen vorgesehen. Die Fixiereinheit 48a ist mittels einer entgegen der Bewegungsrichtung 56d ausgerichteten Verschiebungsrichtung 50d des Klemmelements 20d betätigbar. Zu einer Entriegelung der Fixiereinheit 48d ist eine Verschiebung des Klemmelements 20d parallel zu der Verschiebungsrichtung 50d nötig. Nach erfolgter Verschiebung des Klemmelements 20d parallel zu der Verschiebungsrichtung 50d ist das Klemmelement 20d in eine weitere Schwenkstellung, beispielsweise in eine einer Befestigungsstellung entsprechende Schwenkstellung, mittels einer parallel zu der Bewegungsrichtung 56d ausgerichteten Schwenkbewegung schwenkbar. Die Fixiereinheit 48d ist dazu vorgesehen, das Klemmelement 20d automatisch in einer Schwenkstellung zu fixieren. Nach einer Schwenkbewegung ist die Fixiereinheit 48d dazu vorgesehen, das Klemmelement 20d bei Abwesenheit einer äußeren Kraft in der Schwenkstellung zu fixieren. In Fig. 6 ist beispielhaft der Fall gezeigt, in dem das Klemmelement 20d, ausgehend von der Verstaustellung, in eine Befestigungsstellung geschwenkt wird. In analoger Weise ist das Klemmelement 20d von einer Befestigungsstellung in die Verstaustellung bringbar. Um das Klemmelement 20d von einer Befestigungsstellung in die Verstaustellung zu überführen, ist aufgrund des Spannelements lediglich eine parallel zu der Bewegungsrichtung 56d ausgerichtete Bewegung nötig, um die Fixiereinheit 48d zu entriegeln. Nach erfolgter Entriegelung der Fixiereinheit 48d strebt das Klemmelement 20d aufgrund des Spannelements in die Verstaustellung zurück.

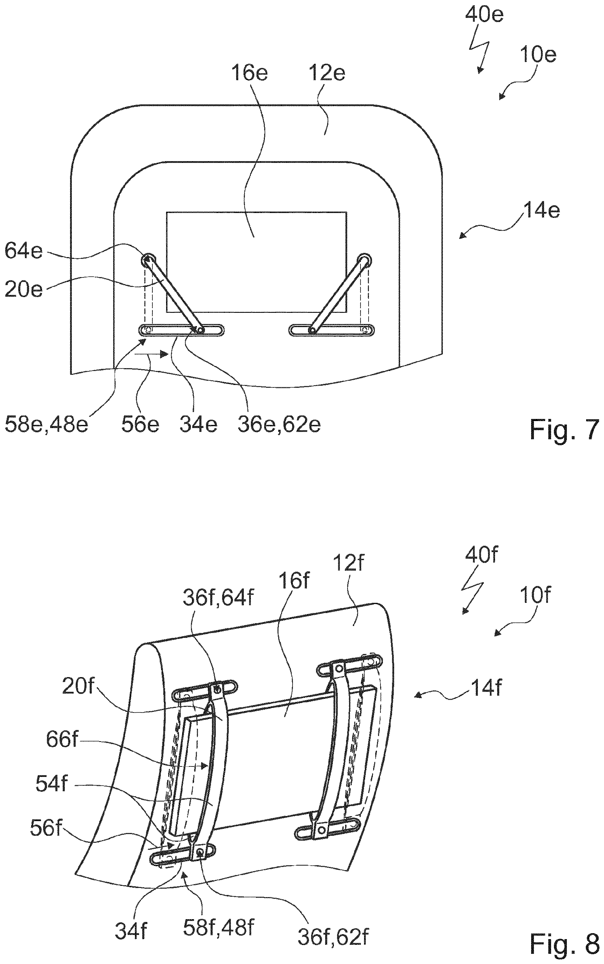

Fig. 7 zeigt ein Beispiel einer Flugzeugsitzbefestigungsvorrichtung. Die Flugzeugsitzbefestigungsvorrichtung 10e weist ein Sitzbauteil 12e, das als eine Rückenlehne ausgebildet ist, und eine Befestigungseinheit 14e auf, die an dem Sitzbauteil 12e angeordnet ist. Hierbei ist die Befestigungseinheit 14e dazu vorgesehen, in einem Betriebszustand einen Tablet-Computer 16e an dem Sitzbauteil 12e austauschbar und bedienbar zu befestigen. Die Befestigungseinheit 14e ist dazu vorgesehen, den Tablet-Computer 16e jederzeit von einem Passagier entnehmbar an dem Sitzbauteil 12e zu befestigen. Zudem ist die Befestigungseinheit 14e dazu vorgesehen, den Tablet-Computer 16e unter Vermeidung eines Verrutschens des Tablet-Computers 16e an dem Sitzbauteil 12e zu befestigen. Hierdurch ist eine Bedienung des Tablet-Computers 16e durch den Passagier in einem an dem Sitzbauteil 12e befestigten Zustand ermöglicht.

Die Befestigungseinheit 14e weist zwei Klemmelemente 20e auf, die beweglich an dem Sitzbauteil 12e angebunden sind. In Fig. 7 ist der Übersichtlichkeit halber lediglich eines der Klemmelemente 20e mit einem Bezugszeichen versehen. Die Klemmelemente 20e sind jeweils als ein verschiebbar an dem Sitzbauteil 12e gelagertes, elastisches Band ausgebildet. Das Sitzbauteil 12e weist zwei Befestigungsschienen 34e auf, die zu einer beweglichen Lagerung eines Bandteilbereichs 36e des elastischen Bands vorgesehen sind. Das Sitzbauteil 12e weist eine einer Anzahl von Klemmelementen 20e entsprechende Anzahl von Befestigungsschienen 34e auf. Das elastische Band könnte beispielsweise als ein Gummiband und/oder als eine Gummischnur ausgebildet sein. Alternativ sind weitere, einem Fachmann als sinnvoll erscheinende Ausgestaltungen des elastischen Bands denkbar. Alternativ zu den zwei Klemmelementen 20e sowie den zwei Befestigungsschienen 34e ist denkbar, dass die Befestigungseinheit 14e vier Klemmelemente 20e zu einer Befestigung des Tablet-Computers 16e aufweist, wobei das Sitzbauteil 12e eine einer Anzahl von Klemmelementen 20e entsprechende Anzahl von Befestigungsschienen 34e aufweist. Zudem ist eine, einem Fachmann als sinnvoll erscheinende Anzahl von Klemmelementen 20e denkbar. Im Folgenden wird lediglich eines der Klemmelemente 20e sowie eine der Befestigungsschienen 34e beschrieben. Das Sitzbauteil 12e weist eine Lagereinheit 58e auf, die dazu vorgesehen ist, die Befestigungseinheit 14e beweglich an dem Sitzbauteil 12e zu lagern. Hierbei ist die Lagereinheit 58e dazu vorgesehen, das Klemmelement 20e der Befestigungseinheit 14e beweglich an dem Sitzbauteil 12e zu lagern. Die Lagereinheit 58e umfasst die Befestigungsschiene 34e.

Die Befestigungsschiene 34e ist im Wesentlichen parallel zu einer Aufständerfläche des Flugzeugsitzes 40e ausgerichtet. Alternativ ist denkbar, dass die Befestigungsschiene 34e im Wesentlichen senkrecht zu der Aufständerfläche des Flugzeugsitzes 40e ausgerichtet ist. Die Befestigungsschiene 34e ist dazu vorgesehen, ein Klemmelementende 62e des Klemmelements 20e beweglich an das Sitzbauteil 12e anzubinden. Das Klemmelementende 62e und der Bandteilbereich 36e des elastischen Bands sind einstückig ausgebildet. Ein dem beweglich an dem Sitzbauteil 12e angebundenen Klemmelementende 62e entgegengesetzt angeordnetes Klemmelementende 64e ist fest an dem Sitzbauteil 12e angebunden. Alternativ ist denkbar, dass das fest an dem Sitzbauteil 12e angebundene Klemmelementende 64e ebenfalls beweglich an dem Sitzbauteil 12e angebunden ist. Hierbei weist das Sitzbauteil 12e eine weitere Befestigungsschiene 34e auf, die im Wesentlichen senkrecht zu der Befestigungsschiene 34e ausgerichtet ist. Alternativ könnte die weitere Befestigungsschiene 34e im Wesentlichen parallel zu der Befestigungsschiene 34e ausgerichtet sein.

Fig. 7 zeigt in gestrichelten Linien eine Verstaustellung des Klemmelements 20e. In der Verstaustellung des Klemmelements 20e ist der Tablet-Computer 16e austauschbar, insbesondere an dem Sitzbauteil 12e anbringbar und/oder von dem Sitzbauteil 12e entfernbar. Ausgehend von der Verstaustellung, ist das Klemmelement 20e durch eine Bewegung parallel zu einer Bewegungsrichtung 56e in eine Befestigungsstellung bewegbar. Das Klemmelement 20e ist dazu vorgesehen, den Tablet-Computer 16e in einer Befestigungsstellung an dem Sitzbauteil 12e einzuklemmen. In einer Befestigungsstellung ist das Klemmelement 20e dazu vorgesehen, den Tablet-Computer 16e zwischen dem Sitzbauteil 12e und dem Klemmelement 20e einzuklemmen. Eine Befestigungsstellung ist in Fig. 7 in durchgezogenen Linien dargestellt. Die Lagereinheit 58e weist eine Fixiereinheit 48e auf, die zu einer Fixierung der Befestigungseinheit 14e in mehreren Stellungen vorgesehen ist. Hierbei ist die Fixiereinheit 48e zu einer Fixierung des Klemmelements 20e in mehreren Stellungen vorgesehen. Die Fixiereinheit 48e ist dazu vorgesehen, das Klemmelement 20e mittels einer Reibung zu fixieren.

Ausgehend von der Verstaustellung, ist das Klemmelement 20e aufgrund einer äußeren Kraft in der im Wesentlichen parallel zu der Befestigungsschiene 34e ausgerichteten Bewegungsrichtung 56e beweglich. Bei Abwesenheit einer äußeren Kraft auf das Klemmelement 20e ist die Fixiereinheit 48e dazu vorgesehen, das Klemmelement 20e mittels der Reibung in einer eingestellten Bewegungsstellung zu fixieren. Hierbei ist die Reibung der Fixiereinheit 48e größer als eine von dem als das elastische Band ausgebildeten Klemmelement 20e erzeugte Kraft entgegen der Bewegungsrichtung 56e. Durch die bewegliche Lagerung des Klemmelements 20e ist eine Befestigung von Tablet-Computern 16e unterschiedlicher Größen realisierbar. Die Befestigungseinheit 14e ist dazu vorgesehen, Tablet-Computer 16e verschiedener Größen und Ausgestaltungen an dem Sitzbauteil 12e zu befestigen.

Fig. 8 ein Beispiel einer Flugzeugsitzbefestigungsvorrichtung. Die Flugzeugsitzbefestigungsvorrichtung 10f weist ein Sitzbauteil 12f, das als eine Rückenlehne ausgebildet ist, und eine Befestigungseinheit 14f auf, die an dem Sitzbauteil 12f angeordnet ist. Hierbei ist die Befestigungseinheit 14f dazu vorgesehen, in einem Betriebszustand einen Tablet-Computer 16f an dem Sitzbauteil 12f austauschbar und bedienbar zu befestigen. Die Befestigungseinheit 14f ist dazu vorgesehen, den Tablet-Computer 16f jederzeit von einem Passagier entnehmbar an dem Sitzbauteil 12f zu befestigen. Zudem ist die Befestigungseinheit 14f dazu vorgesehen, den Tablet-Computer 16f unter Vermeidung eines Verrutschens des Tablet-Computers 16f an dem Sitzbauteil 12f zu befestigen. Hierdurch ist eine Bedienung des Tablet-Computers 16f durch den Passagier in einem an dem Sitzbauteil 12f befestigten Zustand ermöglicht.

Die Befestigungseinheit 14f weist zwei Klemmelemente 20f auf, die beweglich an dem Sitzbauteil 12f angebunden sind. In Fig. 8 ist der Übersichtlichkeit halber lediglich eines der Klemmelemente 20f mit einem Bezugszeichen versehen. Die Klemmelemente 20f sind jeweils als ein verschiebbar an dem Sitzbauteil 12f gelagertes, elastisches Band ausgebildet. Das Sitzbauteil 12f weist vier Befestigungsschienen 34f auf, die zu einer beweglichen Lagerung eines jeweiligen Bandteilbereichs 36f des elastischen Bands vorgesehen sind. Das Sitzbauteil 12f weist doppelt so viele Befestigungsschienen 34f wie Klemmelemente 20f auf. Das elastische Band könnte beispielsweise als ein Gummiband und/oder als eine Gummischnur ausgebildet sein. Alternativ sind weitere, einem Fachmann als sinnvoll erscheinende Ausgestaltungen des elastischen Bands denkbar. Zudem ist eine, einem Fachmann als sinnvoll erscheinende Anzahl von Klemmelementen 20f denkbar. Im Folgenden wird lediglich eines der Klemmelemente 20f sowie eine der Befestigungsschienen 34f beschrieben. Das Sitzbauteil 12f weist eine Lagereinheit 58f auf, die dazu vorgesehen ist, die Befestigungseinheit 14f beweglich an dem Sitzbauteil 12f zu lagern. Hierbei ist die Lagereinheit 58f dazu vorgesehen, das Klemmelement 20f in der Befestigungseinheit 14f beweglich an dem Sitzbauteil 12f zu lagern. Die Lagereinheit 58f umfasst die Befestigungsschiene 34f. Durch die bewegliche Lagerung des Klemmelements 20f ist eine Befestigung von Tablet-Computern 16f unterschiedlicher Größen realisierbar. Die Befestigungseinheit 14f ist dazu vorgesehen, Tablet-Computer 16f verschiedener Größen und Ausgestaltungen an dem Sitzbauteil 12f zu befestigen. Die Lagereinheit 58f weist zudem eine Fixiereinheit 48f auf, die zu einer Fixierung der Befestigungseinheit 14f in mehreren Stellungen vorgesehen ist. Hierbei ist die Fixiereinheit 48f zu einer Fixierung des Klemmelements 20f in mehreren Stellungen vorgesehen. Die Fixiereinheit 48f ist dazu vorgesehen, das Klemmelement 20f mittels einer Reibung zu fixieren.

Die Befestigungsschiene 34f ist im Wesentlichen parallel zu einer Aufständerfläche des Flugzeugsitzes 40f ausgerichtet. Die Befestigungsschiene 34f ist dazu vorgesehen, ein Klemmelementende 62f, 64f des Klemmelements 20f beweglich an das Sitzbauteil 12f anzubinden. Das Klemmelementende 62f, 64f und der Bandteilbereich 36f des elastischen Bands sind einstückig ausgebildet. Das Klemmelement 20f weist zwei Klemmelementteilbereiche 54f auf, die an einem jeweiligen Klemmelementende 62f, 64f miteinander verbunden sind. Die Klemmelementteilbereiche 54f sind gegeneinander verspannt und dazu vorgesehen, in einem kraftlosen Zustand, insbesondere bei Abwesenheit äußerer Kräfte, einander zuzustreben. In einer Verstaustellung sind die Klemmelementteilbereiche 54f in einem direkten Kontakt miteinander angeordnet. Die Verstaustellung ist gekennzeichnet durch eine Abwesenheit des Tablet-Computers 16f. In der Verstaustellung des Klemmelements 20f ist der Tablet-Computer 16f austauschbar, insbesondere an dem Sitzbauteil 12f anbringbar und/oder von dem Sitzbauteil 12f entfernbar. Fig. 8 zeigt in gestrichelten Linien eine Verstaustellung des Klemmelements 20f.

Je nach Größe und Ausgestaltung des an dem Sitzbauteil 12f zu befestigenden Tablet-Computers 16f ist eine Bewegung des Klemmelements 20f notwendig. Das Klemmelement 20f ist im Wesentlichen parallel zu einer Bewegungsrichtung 56f, die im Wesentlichen parallel zu der Befestigungsschiene 34f ausgerichtet ist, beweglich in der Befestigungsschiene 34f gelagert. In dem dargestellten Ausführungsbeispiel ist das Klemmelement 20f, ausgehend von der Verstaustellung, in der Bewegungsrichtung 56f in eine Befestigungsstellung bewegbar. Das Klemmelement 20f ist dazu vorgesehen, den Tablet-Computer 16f in der Befestigungsstellung einzuklemmen. In der Befestigungsstellung ist das Klemmelement 20f dazu vorgesehen, den Tablet-Computer 16f zwischen den beiden Klemmelementteilbereichen 54f einzuklemmen. Die Klemmelementteilbereiche 54f bilden eine Klemmelementöffnung 66f aus, in der der Tablet-Computer 16f in der Befestigungsstellung befestigt ist. Die Befestigungsstellung ist in Fig. 8 mit durchgezogenen Linien dargestellt.

Das Klemmelement 20f ist aufgrund einer äußeren Kraft in der im Wesentlichen parallel zu der Befestigungsschiene 34f ausgerichteten Bewegungsrichtung 56f beweglich. Bei Abwesenheit einer äußeren Kraft auf das Klemmelement 20f ist die Fixiereinheit 48f dazu vorgesehen, das Klemmelement 20f mittels der Reibung in einer eingestellten Stellung zu fixieren. Hierbei ist die Reibung der Fixiereinheit 48f größer als in einem Betrieb des Tablet-Computers 16f einwirkende, entgegen der Bewegungsrichtung 56f ausgerichtete Kräfte. Zudem ist die Reibung der Fixiereinheit 48f größer als versehentlich auf die Befestigungseinheit 14f einwirkende, entgegen der Bewegungsrichtung 56f ausgerichtete Kräfte, beispielsweise durch einen vorbeilaufenden Passagier erzeugte Kräfte. Weiterhin ist die Reibung der Fixiereinheit 48f größer als eine von dem als das elastische Band ausgebildeten Klemmelement 20f erzeugte Kraft entgegen der Bewegungsrichtung 56f.

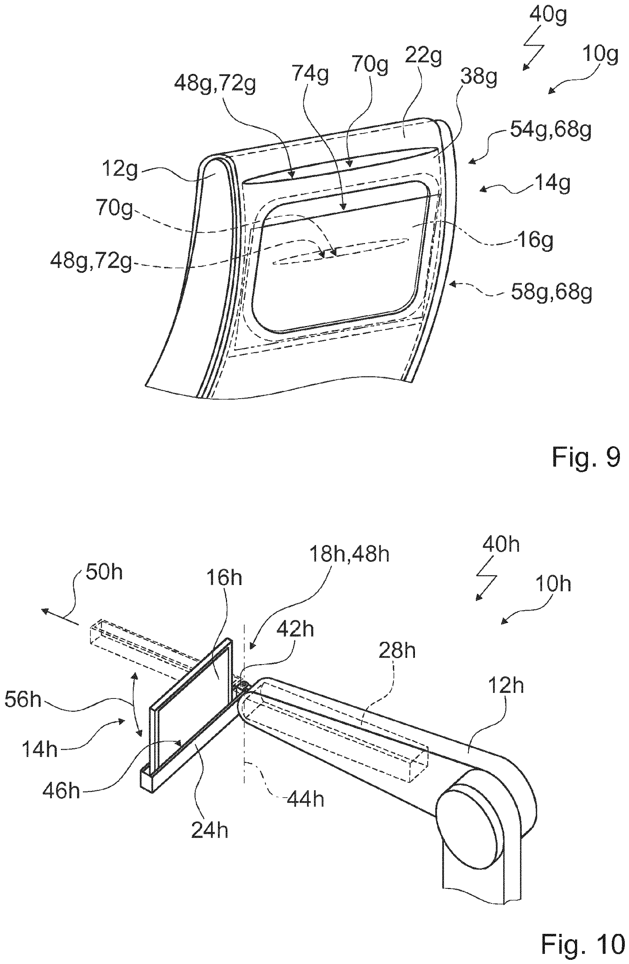

Fig. 9 zeigt ein Beispiel einer Flugzeugsitzbefestigungsvorrichtung. Die Flugzeugsitzbefestigungsvorrichtung 10g weist ein Sitzbauteil 12g, das als eine Rückenlehne ausgebildet ist, und eine Befestigungseinheit 14g auf, die an dem Sitzbauteil 12g angeordnet ist. Hierbei ist die Befestigungseinheit 14g dazu vorgesehen, in einem Betriebszustand einen Tablet-Computer 16g an dem Sitzbauteil 12g austauschbar und bedienbar zu befestigen. Die Befestigungseinheit 14g ist dazu vorgesehen, den Tablet-Computer 16g jederzeit von einem Passagier entnehmbar an dem Sitzbauteil 12g zu befestigen. Zudem ist die Befestigungseinheit 14g dazu vorgesehen, den Tablet-Computer 16g unter Vermeidung eines Verrutschens des Tablet-Computers 16g an dem Sitzbauteil 12g zu befestigen. Hierdurch ist eine Bedienung des Tablet-Computers 16g durch den Passagier in einem an dem Sitzbauteil 12g befestigten Zustand ermöglicht.

Das Sitzbauteil 12g umfasst einen Sitzbezug 22g, wobei die Befestigungseinheit 14g in dem Sitzbezug 22g des Sitzbauteils 12g integriert ist. Die Befestigungseinheit 14g sowie der Sitzbezug 22g sind aus Leder ausgebildet. Alternativ könnten die Befestigungseinheit 14g sowie der Sitzbezug 22g aus Stoff und/oder Neopren ausgebildet sein. Ebenfalls sind weitere, einem Fachmann als sinnvoll erscheinende Ausbildungen der Befestigungseinheit 14g sowie des Sitzbezugs 22g denkbar. Die Befestigungseinheit 14g weist zwei taschenartige Behältnisse 68g auf, die jeweils einstückig mit dem Sitzbezug 22g ausgebildet sind. Hierbei sind die taschenartigen Behältnisse 68g jeweils an den Sitzbezug 22g angenäht, wobei die Befestigungseinheit 14g als ein Adapterbauteil des Sitzbezugs 22g ausgebildet ist. Alternativ könnten der Sitzbezug 22g sowie die taschenartigen Behältnisse 68g in einem Stück geformt sein. Ebenfalls denkbar ist eine größere oder kleinere Anzahl von taschenartigen Behältnissen 68g. Durch eine verschiedene Anzahl von taschenartigen Behältnissen 68g, die in unterschiedlichen Größen vorliegen, können Tablet-Computer 16g verschiedener Größen und Ausgestaltungen an dem Sitzbauteil 12g befestigt werden. Die Befestigungseinheit 14g ist dazu vorgesehen, Tablet-Computer 16g verschiedener Größen und Ausgestaltungen an dem Sitzbauteil 12g zu befestigen. Im Folgenden wird lediglich eines der taschenartigen Behältnisse 68g beschrieben. Beispielsweise könnte ein erstes der taschenartigen Behältnisse 68g für Tablet-Computer 16g einer Größe von 9 bis 12 Zoll und ein zweites der taschenartigen Behältnisse 68g für Tablet-Computer 16g einer Größe von 6 bis 9 Zoll vorgesehen sein.

Das taschenartige Behältnis 68g umfasst eine Einbringöffnung 70g, mittels der der Tablet-Computer 16g in das in dem Sitzbezug 22g integrierte taschenartige Behältnis 68g einbringbar ist. Die Einbringöffnung 70g ist jeweils als ein Schlitz ausgebildet. Zudem ist die Einbringöffnung 70g in einem oberen Bereich des taschenartigen Behältnisses 68g angeordnet. Das Sitzbauteil 12g weist eine Lagereinheit 58g auf. Die Lagereinheit 58g ist einstückig mit der Befestigungseinheit 14g ausgebildet. Die Lagereinheit 58g weist eine Fixiereinheit 48g auf, die zu einer Fixierung der Befestigungseinheit 14g in mehreren Stellungen vorgesehen ist. Hierbei ist die Fixiereinheit 48g dazu vorgesehen, das jeweilige taschenartige Behältnis 68g zu fixieren. Die Fixiereinheit 48g ist in einem Bereich der Einbringöffnung 70g angeordnet und dazu vorgesehen, die Einbringöffnung 70g zu verschließen. Die Fixiereinheit 48g weist für jedes taschenartige Behältnis 68g je ein Fixiermittel 72g auf, das zu einer Fixierung des in dem taschenartigen Behältnis 68g eingebrachten Tablet-Computers 16g vorgesehen ist. Das Fixiermittel 72g ist als ein Klettverschluss (nicht dargestellt) ausgebildet. Alternativ könnte das Fixiermittel 72g als ein Reißverschluss ausgebildet sein. Ebenfalls denkbar sind weitere, einem Fachmann als sinnvoll erscheinende Ausbildungen des Fixiermittels 72g.

Der Sitzbezug 22g weist einen transparenten Sichtbereich 74g auf, der dazu vorgesehen ist, elektromagnetische Strahlung aus einem Wellenlängenbereich des sichtbaren Lichts teilweise, insbesondere zu einem Großteil, insbesondere zu einem Anteil von mehr als 70 %, insbesondere von mehr als 80 % und vorteilhaft von mehr als 90 %, durch den Sichtbereich 74g hindurchzulassen. Beispielsweise ist der Sichtbereich 74g als eine Materialaussparung des Sitzbezugs 22g ausgebildet. Ebenfalls denkbar ist, dass der Sitzbezug 22g ein transparentes Material, beispielsweise einen Kunststoff, aufweist, das den Sichtbereich 74g ausbildet. Der Sitzbezug 22g des Sitzbauteils 12g weist einen materialverstärkten Sitzbezugteilbereich 38g auf. Der materialverstärkte Sitzbezugteilbereich 38g ist in einem Außenbereich des taschenartigen Behältnisses 68g angeordnet. Hierbei umschließt der materialverstärkte Sitzbezugteilbereich 38g den Sichtbereich 74g. Der materialverstärkte Sitzbezugteilbereich 68g ist zu einer Stabilisierung der Befestigungseinheit 14g sowie des mittels der Befestigungseinheit 14g befestigten Tablet-Computers 16g vorgesehen. Denkbar ist, dass eine Anzahl an Sichtbereichen 74g einer Anzahl an taschenartigen Behältnissen 68g entspricht, wobei jedes taschenartige Behältnis 68g einen seiner Größe entsprechenden Sichtbereich 74g aufweist.

Fig. 10 zeigt die Erfindung. Die Flugzeugsitzbefestigungsvorrichtung 10h weist ein Sitzbauteil 12h, das als eine Armlehne ausgebildet ist, und eine Befestigungseinheit 14h auf, die an dem Sitzbauteil 12h angeordnet ist. Hierbei ist die Befestigungseinheit 14h dazu vorgesehen, in einem Betriebszustand einen Tablet-Computer 16h an dem Sitzbauteil 12h austauschbar und bedienbar zu befestigen. Die Befestigungseinheit 14h ist dazu vorgesehen, den Tablet-Computer 16h jederzeit von einem Passagier entnehmbar an dem Sitzbauteil 12h zu befestigen. Zudem ist die Befestigungseinheit 14h dazu vorgesehen, den Tablet-Computer 16h unter Vermeidung eines Verrutschens des Tablet-Computers 16h an dem Sitzbauteil 12h zu befestigen. Hierdurch ist eine Bedienung des Tablet-Computers 16h durch den Passagier in einem an dem Sitzbauteil 12h befestigten Zustand ermöglicht.

Die Befestigungseinheit 14h weist ein Befestigungselement 24h auf, das dazu vorgesehen ist, den Tablet-Computer 16h an dem Sitzbauteil 12h austauschbar und bedienbar zu befestigen. Das Befestigungselement 24h ist als eine Schiene ausgebildet und weist eine U-profilförmige Gestalt auf. Das Befestigungselement 24h weist eine Befestigungsnut 46h auf, die dazu vorgesehen ist, den Tablet-Computer 16h aufzunehmen. Die Befestigungsnut 46h ist als die U-profilförmige Gestalt ausgebildet. Die Befestigungseinheit 14h ist dazu vorgesehen, den Tablet-Computer 16h mittels einer Gewichtskraft des Tablet-Computers 16h an dem Sitzbauteil 12h zu befestigen. Alternativ ist denkbar, dass die Befestigungseinheit 14h Befestigungsmittel, beispielsweise zu einer Klemmung, aufweist, um den Tablet-Computer 16h zu befestigen. Die Befestigungseinheit 14h ist dazu vorgesehen, Tablet-Computer 16h verschiedener Größen und Ausgestaltungen mittels der Befestigungsnut 46h des Befestigungselements 24h an dem Sitzbauteil 12h zu befestigen.

Die Flugzeugsitzbefestigungsvorrichtung 10h weist eine Lagereinheit 18h auf, die dazu vorgesehen ist, die Befestigungseinheit 14h schwenkbar an dem Sitzbauteil 12h zu lagern. Hierbei weist die Lagereinheit 18h eine Lagereinheitenschwenkachse 44h auf, mittels der die Befestigungseinheit 14h schwenkbar an dem Sitzbauteil 12h gelagert ist. Die Lagereinheit 18h weist ein Lagerelement 42h auf, das als ein Gelenk ausgebildet ist. Das Lagerelement 42h ist zwischen dem Befestigungselement 24h und dem Sitzbauteil 12h angeordnet. Eine jeweilige Längserstreckung des Befestigungselements 24h sowie des Sitzbauteils 12h ist im Wesentlichen parallel ausgerichtet.

Die Lagereinheit 18h weist eine Fixiereinheit 48h auf, die zu einer Fixierung der Befestigungseinheit 14h in mehreren Stellungen vorgesehen ist. Die Fixiereinheit 48a ist innerhalb des Lagerelements 42h angeordnet. Die Fixiereinheit 48h ist mittels einer senkrecht zu der Lagereinheitenschwenkachse 44h ausgerichteten Verschiebungsrichtung 50h der Befestigungseinheit 14h betätigbar. Um die Befestigungseinheit 14h aus einer ersten Schwenkstellung in eine zweite Schwenkstellung zu bewegen, muss zunächst die Fixiereinheit 48h entriegelt werden. Zu einer Entriegelung der Fixiereinheit 48h ist eine parallel zu der Verschiebungsrichtung 50h ausgerichtete Verschiebung der Befestigungseinheit 14h nötig. In dieser verschobenen Stellung ist die Befestigungseinheit 14h schwenkbar um die Lagereinheitenschwenkachse 44h. Somit ist eine gewünschte Schwenkstellung der Befestigungseinheit 14h einstellbar. Zu einer Fixierung der Befestigungseinheit 14h in einer gewünschten Schwenkstellung ist die Befestigungseinheit 14h entgegen der Verschiebungsrichtung 50h zu verschieben.

Die Befestigungseinheit 14h ist, ausgehend von der ersten Schwenkstellung, in eine Verstaustellung bringbar. In der ersten Schwenkstellung ist die Befestigungseinheit 14h in einer Verlängerung des Sitzbauteils 12h angeordnet. Die erste Schwenkstellung ist in Fig. 10 gestrichelt eingezeichnet, wobei eine Bewegungsrichtung 56h zwischen der ersten und der zweiten Schwenkstellung mittels eines Doppelpfeils dargestellt ist. Hierbei ist die Befestigungseinheit 14h durch eine Bewegung entgegen der Verschiebungsrichtung 50h in die Verstaustellung bringbar. In der Verstaustellung ist die Befestigungseinheit 14h innerhalb des Sitzbauteils 12h angeordnet. Hierzu weist das Sitzbauteil 12h eine Ausnehmung 28h auf, in der die Lagereinheit 18h angeordnet ist. Hierbei ist die Lagereinheit 18h in der Verstaustellung in der Ausnehmung 28h des Sitzbauteils 12h angeordnet. Zudem ist in der Verstaustellung die Befestigungseinheit 14h in der Ausnehmung 28h angeordnet. Die Ausnehmung 28h ist als ein in dem Sitzbauteil 12h angeordneter Hohlraum ausgebildet.

In einem Beispiel könnte die Befestigungseinheit 14h eine Klammer aufweisen, die das als die Armlehne ausgebildete Sitzbauteil 12h teilweise umschließt. Mittels der Klammer könnte ein flexibler Tragarm an dem Sitzbauteil 12h befestigt sein, wobei der Tragarm jeweils mittels eines Gelenks an der Klammer sowie an dem Tablet-Computer 16h angebracht wäre. Somit wäre der Tablet-Computer 16h schwenkbar, austauschbar und bedienbar an dem Sitzbauteil 12h befestigt.

### Bezugszeichen

- 10: Flugzeugsitzbefestigungsvorrichtung
- 12: Sitzbauteil
- 14: Befestigungseinheit
- 16: Tablet-Computer
- 18: Lagereinheit
- 20: Klemmelement
- 22: Sitzbezug
- 24: Befestigungselement
- 26: Rahmen
- 28: Ausnehmung
- 30: Gegenstandshalteeinheit
- 32: Klammer
- 34: Befestigungsschiene
- 36: Bandteilbereich
- 38: Sitzbezugteilbereich
- 40: Flugzeugsitz
- 42: Lagerelement
- 44: Lagereinheitenschwenkachse
- 46: Befestigungsnut
- 48: Fixiereinheit
- 50: Verschiebungsrichtung
- 52: Leitungselement
- 54: Klemmelementteilbereich
- 56: Bewegungsrichtung
- 58: Lagereinheit
- 60: Lagereinheitenschwenkachse
- 62: Klemmelementende
- 64: Klemmelementende
- 66: Klemmelementöffnung
- 68: taschenartiges Behältnis
- 70: Einbringöffnung
- 72: Fixiermittel
- 74: Sichtbereich

## Patentansprüche

1. Flugzeugsitzbefestigungsvorrichtung mit zumindest einem Sitzbauteil (12h) und mit zumindest einer Befestigungseinheit (14h), die zumindest teilweise an dem Sitzbauteil (12h) angeordnet und dazu vorgesehen ist, in zumindest einem Betriebszustand zumindest einen Tablet-Computer (16h) an dem Sitzbauteil (12h), das als eine Armlehne ausgebildet ist, austauschbar und bedienbar zu befestigen, wobei die Befestigungseinheit (14h) dazu vorgesehen ist, den Tablet-Computer (16h) mittels einer Gewichtskraft des Tablet-Computers (16h) an dem Sitzbauteil (12h) zu befestigen und ein Befestigungselement (24h) aufweist, das dazu vorgesehen ist, den Tablet-Computer (16h) an dem Sitzbauteil (12h) austauschbar und bedienbar zu befestigen, **dadurch gekennzeichnet, dass**
das Befestigungselement (24h) eine Befestigungsnut (46h) aufweist, die als U-profilförmige Gestalt ausgebildet ist, die dazu vorgesehen ist, den Tablet-Computer (16h) aufzunehmen.

2. Flugzeugsitzbefestigungsvorrichtung zumindest nach Anspruch 1, **dadurch gekennzeichnet, dass**
das Sitzbauteil (12b-c; 12h) zumindest eine Ausnehmung (28b-c; 28h) aufweist, in der die Lagereinheit (18b-c; 18h) zumindest zu einem Großteil angeordnet ist.

3. Flugzeugsitz mit zumindest einer Flugzeugsitzbefestigungsvorrichtung (10a-h) nach einem der Ansprüche 1 bis 2.

## Claims

1. Aircraft seat securing device with at least one seat component (12h) and with at least one fixation unit (14h), which is at least partly arranged on the seat component (12h) and is configured to fixate, in at least one operating state, at least one tablet computer (16h) on the seat component (12h) that is embodied as an armrest in an exchangeable and operable fashion,
wherein the fixation unit (14h) is configured to fixate the tablet computer (16h) on the seat component (12h) by a weight force of the tablet computer (16h), and comprises a fixation element (24h), which is configured to fixate the tablet computer (16h) on the seat component (12h) in an exchangeable and operable fashion, **characterised in that**
the fixation element (24h) comprises a fixation groove (46h), which is embodied as a U-profile-shaped form that is configured to accommodate the tablet computer (16h).

2. Aircraft seat securing device at least according to claim 1,
**characterised in that**
the seat component (12b-c; 12h) comprises at least one recess (28b-c; 28h), which the bearing unit (18b-c; 18h) is arranged at least to a large extent.

3. Aircraft seat with at least one aircraft seat securing device (10a-h) according to one of claims 1 to 2.

## Revendications

1. Dispositif de fixation sur un siège d'avion avec au moins un composant structurel de siège (12h) et avec au moins une unité de fixation (14h), qui est disposé au moins partiellement au composant structurel de siège (12h) et est prévue à fixer, dans au moins un état opératif, au moins une tablette PC (16h) au composant structurel de siège (12h), qui est implémenté comme accoudoir, de façon échangeable et opérable,
l'unité de fixation (14h) étant prévue à fixer la tablette PC (16h) au composant structurel de siège (12h) par la force de la pesanteur de la tablette PC (16h), et comprenant un élément de fixation (24h) prévu pour fixer la tablette PC (16h) au composant structurel de siège (12h) de façon échangeable et opérable, **caractérisé en ce que**
l'élément de fixation (24h) comporte une rainure de fixation (46h), qui est réalisée comme figure de profil en U prévue à recevoir la tablette PC (16h).

2. Dispositif de fixation sur un siège d'avion au moins selon la revendication 1, **caractérisé en ce que**
le composant structurel de siège (12b-c ; 12h) comporte au moins une échancrure (28b-c ; 28h), dans laquelle l'unité palier (18b-c ; 18h) est disposée au moins en grande partie.

3. Siège d'avion avec au moins un dispositif de fixation sur un siège d'avion (10a-h) selon l'une quelconque des revendications 1 à 2.
